# EUROPEAN PATENT APPLICATION

(11) **EP 2 003 871 A1**
(43) Date of publication of application: **17.12.2008**
(21) Application number: 07110222.2
(22) Date of filing: 13.06.2007
(51) Int. Cl.: H04N 1/407, H04N 1/60

(54) **Signal converter**

(71) Applicant: FUJIFILM Manufacturing Europe B.V., 5047 TK Tilburg (NL)
(72) Inventor: Nauta, Auke, 4261 BP Wijk en Aalburg (NL); Nauta, Rindert, 7521 GE Enschede (NL)
(74) Representative: van Loon, C.J.J.

(57) **Abstract**

Signal converter for converting a raw digital signal, e.g. of an optical densitometer, into a calibrated digital signal, comprising an input for receiving the raw digital signal comprising at least one sample, conversion means for converting the raw digital signal into the calibrated digital signal comprising at least one samples according to a predetermined relationship between each possible value of the raw digital signal sample and a corresponding value of the calibrated digital signal sample, and an output for outputting the calibrated digital signal, e.g. to a remainder of a digital printer. The signal converter comprises a memory for storing the predetermined relationship.

## Description

The invention relates to a signal converter for converting a raw digital signal into a calibrated digital signal.

In the art of image recording it is known to print digital images, e.g. digital photographs, using a digital printer. However, it is possible that color and/or black/white settings of such digital printer are mal-adjusted so that a photograph printed on the printer displays colors which are not the same as in the original digital image. This is highly noticeable when printing a black and white image.

Thereto, many printers these days are equipped with an optical densitometer for determining a color density measurement of a reference chart printed by that printer. Hence, based on the density measurement the printer can be calibrated, by adjusting color printing settings such that a repeated cycle of printing a reference chart and density measurement of that chart will, or is expected to, be in conformity with the desired value, so as to correct any mal-adjustment of the color density.

It appears, however, that printers sometimes are equipped with a densitometer which is not accurate enough, or at least results in a printed image not being the same as the original digital image. Such inaccuracies for instance, may be caused by wear and tear or low manufacturing standards. It is also possible that a plurality of printers, possibly of the same type and make, do not produce printed images that are sufficiently similar with respect to color density, e.g. due to differences in the densitometers of the printers.

The object of the invention is to provide a solution to at least one of the above problems. It is also an object of the problem to provide a solution to similar problems in other systems.

Thereto, according to the invention, a signal converter according to claim 1 is provided.

Since the signal converter comprises an input it may be connected to the densitometer of the digital printer for receiving a measured raw digital density signal comprising at least one sample. It will be appreciated that the raw digital density signal may also comprise a plurality of consecutive samples. Since the memory of the converter stores the predetermined relationship between each possible value of the inputted raw digital signal sample and the corresponding value of the calibrated digital signal sample to be outputted, the signal converter can output the calibrated digital signal associated with the actually inputted signal value, regardless of the actual value of the inputted signal value outputted by the densitometer. Hence, the signal converter may convert the inputted raw digital signal into the calibrated digital signal to be outputted.

Thus, any deviation in the signal value outputted by the densitometer, e.g. due to inaccuracy of the densitometer, may be corrected by the signal converter, regardless of the output characteristic of the densitometer.

The predetermined relationship between each possible value of the raw digital signal sample and the associated value of the calibrated digital signal sample may e.g. be stored in a look-up table in the memory of the converter. Such look-up table may comprise entries for each possible value of the raw digital signal sample. It is also possible that the corresponding value of the calibrated digital signal sample is calculated, e.g. on-line, on the basis of interpolation or extrapolation. It is also possible that, in addition to or instead of, a look-up table, the corresponding value of the calibrated digital signal sample is calculated, e.g. on-line, on the basis of an algebraic function, such as a polynomial, stored in the memory of the signal converter.

Preferably the memory of the signal converter is a non-volatile memory. This provides the advantage that the predetermined relationship is maintained in case, e.g. electric, power to the memory is interrupted.

Preferably, the signal converter is arranged to be operated in a first mode and in a second mode, wherein the converter is arranged for, in the first mode in response to receiving a sequence of raw digital signal samples corresponding to a measurement of a predetermined calibration sequence, determining the predetermined relationship between each possible value of the raw digital signal sample and the corresponding value of the calibrated digital signal sample and storing the predetermined relationship in the memory, and wherein the converter is arranged for, in the second mode in response to receiving a raw digital signal sample corresponding to an actual measurement, converting that raw digital signal sample into a calibrated digital signal sample according to the predetermined relationship between each possible value of the raw digital signal sample and the corresponding value of the calibrated digital signal sample.

Thus, in the second mode the signal converter can convert the raw digital signal into a calibrated digital signal as described above.

Thus, in the first mode the signal converter can store the predetermined relationship to memory, wherein the predetermined relationship is determined by comparing raw digital signal sample values inputted by the densitometer, obtained when the densitometer measures density values of a predetermined calibration sequence, e.g. a printed calibration chart, with predetermined calibration signal values which are known to correspond to the actual density values of the calibration sequence.

Preferably, the signal converter is arranged for automatically recognizing in a raw digital signal inputted at the input the sequence of raw digital signal samples corresponding to the predetermined calibration sequence. Hence, when e.g. a calibration chart is presented to and measured by the densitometer, the signal converter automatically recognizes that the inputted raw digital signal sample sequence corresponds to the calibration sequence. Hence, the signal converter can automatically, without intervention of a user to the signal converter, set (or reset) the predetermined relationship.

In a special embodiment the signal converter is arranged to determine the predetermined relationship on the basis of a plurality of sequences of raw digital signal samples corresponding to a plurality of measurements of the predetermined calibration sequence. Hence, the predetermined relationship may e.g. be based on an average of a plurality of measurements of the predetermined calibration sequence. Thus, an accuracy of the predetermined relationship may be improved.

Preferably, the input is arranged to be brought in signal communication with a measurement apparatus for providing a measurement signal at the input of the converter, and the output of the converter is arranged to be brought in signal communication with a measurement signal processing device for providing the calibrated signal to the signal processing device. Thus, the input can be brought in signal communication with a density signal output of the densitometer, and the output can be brought in signal communication with a density signal input of the remainder of the digital printer, which density signal input is otherwise in signal communication with the density signal output of the densitometer.

Preferably, signal communication in the other direction, e.g. from the signal processing device to the measurement apparatus will be fed through the signal converter undisturbed and not affected by the signal converter.

Further, the signal converter is preferably arranged to not affect any signal communication from the measurement apparatus to the signal processing device, or vice versa, when no predetermined relationship is stored in the memory.

In a special embodiment the signal converter is arranged to determine disconnection of the signal communication between the input and the measurement apparatus, e.g. due to replacement of the measurement apparatus by another specimen, possibly but not necessarily of the same type. Hence, the signal converter automatically senses that the measurement device has been replaced by another specimen. When such an event has been determined, the predetermined relationship may be inactivated, e.g. erased from memory, automatically. Furthermore, the operator may be signaled to supply the predetermined calibration sequence to the newly installed measurement apparatus, thereby creating a new (valid) predetermined relationship.

It will be clear that said signal communication may be wired signal communication and/or wireless signal communication.

Preferably, the signal converter is arranged as a replacement module for replacing a direct data communication which otherwise brings the measurement apparatus in signal communication with the measurement signal processing device. Hence, it is possible to replace a cable which otherwise provides signal communication between the density signal output of the densitometer and the density signal input of the remainder of the digital printer, and replace it with the signal converter provided as replacement cable. Alternatively, the signal converter is arranged as an add-on module arranged to be added to (or inserted into) the direct data connection which otherwise brings the measurement apparatus in signal communication with the measurement signal processing device, e.g. as a plug-in module arranged to be connected between the densitometer and the cable. Hence, no customization of the digital printer is required other than adding the signal converter.

Preferably, herein the signal converter is arranged for receiving electric power from the measurement apparatus, such as the densitometer, and/or the measurement signal processing device, such as the remainder of the digital printer. Hence, the signal converter does not require an additional external electric power supply, making installation of the signal converter in a newly built or existing digital printer very simple.

In a special embodiment, the signal converter comprises an A/D (analog-to-digital) converter at the input for converting an input raw analog signal into the raw digital signal, and a D/A (digital-to-analog) converter at the output for converting the calibrated digital signal into a calibrated analog signal. Hence, the signal converter can convert a raw analog signal, inputted at the A/D converter, into a calibrated analog signal, outputted at the D/A converter.

The invention also relates to a method for modifying an existing digital printer, comprising adding a signal converter according to any one of the previous claims, such that the input of the signal converter is in signal communication with a density signal output of a densitometer of the digital printer and that the output of the signal converter is in signal communication with a density signal input of the remainder of the digital printer. Hence, it is possible to add the signal converter, e.g. as the replacement cable, without modifying the densitometer of the digital printer, and without modifying the remainder of the digital printer. Thus, a very simple modification is obtained which considerably improves the density settings of the digital printer.

The invention will now be further elucidated by means of, nonlimiting, examples and the accompanying drawing. Herein
Fig. 1a shows a schematic representation of a digital printer according to the prior art;
Fig. 1b shows a schematic representation of a digital printer comprising a signal converter according to a first embodiment of the invention;
Fig. 2 shows a schematic representation of the signal converter of Fig. 1b in more detail; and
Fig. 3 shows a schematic representation of a second embodiment of the signal converter according to the invention.

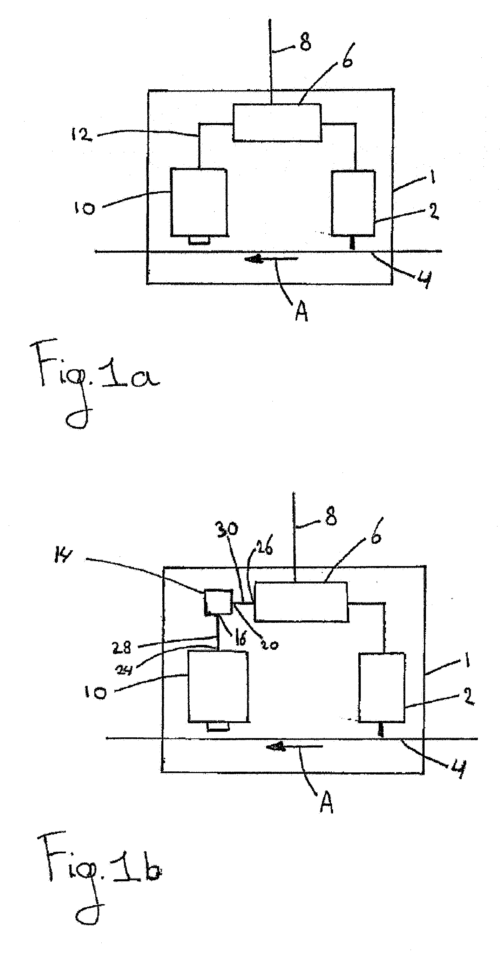

Fig. 1a shows a schematic representation of a digital printer 1 according to the prior art. The digital printer 1 comprises a printing device 2, such as an ink-jet head, a laser printing arrangement, an ink transfer system or a chemical photo-printer, for printing an image on a substrate 4, such as a leaf of paper. The substrate 4 may be moved relative to the printing device 2, in this example in the direction of the arrow A, by a substrate transport system (not shown). The printer 1 further comprises a control unit 6 with a control input 8. The control unit may for instance receive image data, corresponding to an original digital image such as a digital photograph, via the input 8 and control the printing device 2 such that an image is printed onto the substrate 4 according to the image data.

The control unit 6 may store print settings such as density settings. The density settings determine how a density in a received digital image is to be achieved in the printed image. It will be appreciated that mal-adjustment of the density settings may e.g. result in the printed image appearing too light or too dark with respect to the original digital image. Since the printing device 2 may be arranged to print in certain colors only, e.g. magenta, cyan, yellow and optionally black, it is also possible that at least one of the printed colors appears too light or too dark in the printed image, resulting in a printed image with distorted color balance. The distorted color balance is highly noticeable in black and white images.

In the example of Fig. 1a the printer 1 further comprises a densitometer 10. The densitometer 10 is arranged for measuring a color density of a printed image. The densitometer 10 is in data communication with the control unit 6, in this example via a communications cable 12. Hence, a density signal representing the measured density is supplied by the densitometer 10 to the control unit 6.

Preferably, once in a while, the printer prints a predetermined printed reference image, such as a reference chart on the basis of an original digital reference image. The digital reference image may e.g. comprise regions with predetermined color density, for separate (pure) printed colors and/or mixed colors, e.g. in the form of a wedge having a color density increasing from a first predetermined density level to a second predetermined density level. It is also common that the reference image only comprises regions in grey with a predetermined color density. The densitometer 10 measures the density of the regions of the printed reference image. The control unit 6 is arranged to compare the measured density of the regions of the printed reference image with the known predetermined density of the regions of the digital reference image. When a discrepancy is detected between the measured density and the known density, the corresponding density setting of the printer is mal-adjusted and may be corrected according to the difference between the measured density and the known density. Any subsequently printed image will, or is expected to, be printed with density settings which result in the printed image being in conformity with, or visually closer to, the original digital image.

It appears, however, that the printer 1 may be equipped with a densitometer which is not accurate enough, or at least results in a printed image not being the same as in the original digital image, even after the above-described correction of the density settings. It is also possible that a plurality of such printers, possibly of the same type and make, do not produce printed images that are sufficiently similar with respect to color density, e.g. due to differences in the densitometers of the printers. Differences in color density are highly noticeable in black and white images.

Fig. 1b shows a schematic representation of a digital printer 1 according to a first embodiment of the invention. The digital printer 1 of Fig. 1b is equal to the digital printer of Fig. 1a with the exception of the addition of a signal converter 14.

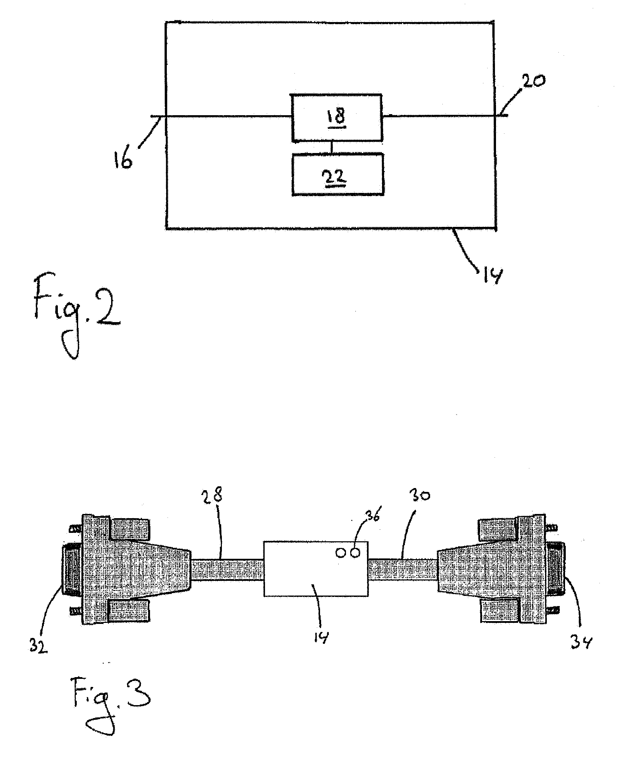

Fig. 2 shows the signal converter 14 of Fig. 1b in more detail. The signal converter 14 comprises an input for receiving the density signal of the densitometer. In this example the density signal is a digital signal, herein referred to as raw digital signal, comprising at least one sample. The signal converter 14 further comprises conversion means 18 for converting the raw digital signal into a calibrated digital signal comprising at least one sample. The signal converter 14 further comprises an output 20 for outputting the calibrated digital signal. It will be appreciated that the raw digital signal and the calibrated signal may also comprise a plurality of consecutive samples.

The conversion means 18 are arranged for converting the raw digital signal into the calibrated digital signal according to a predetermined relationship between each possible value of the raw digital signal sample and a corresponding value of the calibrated digital signal sample. The signal converter 14 comprises a memory 22 for storing the predetermined relationship. Preferably, the memory 22 is a non-volatile memory, so that the predetermined relationship is maintained in the memory if electric power is lost.

In this example the predetermined relationship between each possible value of the raw digital signal sample and the corresponding value of the calibrated digital signal sample is stored in a look-up table in the memory 22 of the converter 14. In this example the look-up table comprises entries for each possible value of the raw digital signal sample. This look-up table can be thought of as a table comprising two columns. The first column comprises all possible values of the raw digital signal sample, one possible value in each row of the column. The second column comprises values of the calibrated digital signal sample. Each row of the second column comprises the calibrated digital signal value associated with the value of the raw digital signal sample in the same row of the first column. Thus, when a raw digital signal is inputted at the input 16, each sample of the raw digital signal is isolated and its value traced in the first column, once found the associated calibrated digital signal value is read from the corresponding row in the second column and outputted at the output 20.

It will be appreciated that it is also possible that the value of the calibrated digital signal sample associated with an inputted raw digital signal sample values is calculated, e.g. on-line, that is in real time, on the basis of interpolation or extrapolation to reduce the size of the look-up table in the memory 22. It will be appreciated that it is also possible that, in addition to or instead of, a look-up table, the value of the calibrated digital signal sample associated with an inputted raw digital signal sample value is calculated, e.g. on-line, on the basis of an algebraic function, such as a polynomial, stored in the memory 22 of the signal converter 14.

Returning to Fig. 1b, the input 16 is in signal communication with a density signal output 24 of the densitometer via a first signal communications line 28. The output 20 is in signal communication with a density signal input 26 of the remainder of the digital printer, here with the density signal input of the control unit 6, via a second communications line 30. It will be appreciated that the assembly of the signal converter 14, and the first and second communications lines 28, 30, can be seen as a replacement module, replacing the communications cable 12 that forms the signal communication between the density signal output 24 of the densitometer and the density signal input 26 of the remainder of the digital printer 1 which is shown in Fig. 1a.

Fig. 3 shows a schematic view of an example of the replacement module 14, 28, 30, here designed as replacement cable. The replacement module of Fig. 3 comprises a first connector 32 for connection to the density signal output 24 of the densitometer and a second connector 34 for connection to the density signal input 26 of the remainder of the digital printer 1. It will be appreciated that the signal converter 14 may be integral with the connector 32 or the connector 34.

It will be appreciated that it is also possible that the signal converter 14 is designed as an add-on module. The signal converter 14 may e.g. be provided with an input connector at the input 16 arranged to be connected to an output connector of the densitometer 10 and with an output connector at the output 20 arranged to be connected to a connector of the communications cable 12 normally connected to the output connector of the densitometer 10. Alternatively the add-on module may be arranged to be connected directly to the control unit 6.

It will be appreciated that an existing digital printer which is not provided with the signal converter, may be modified by installing the signal converter according to the invention, e.g. in the form of the replacement module or the add-on module.

When the signal converter 14 is designed as the replacement module or the add-on module, it is preferred that the signal converter is arranged for receiving electric power from the densitometer 10, and/or the measurement signal processing device, such as the remainder of the digital printer, in this example the processing unit 6. Hence, the signal converter does not require an additional external electric power supply, making installation of the signal converter in a newly built or existing digital printer very simple.

The signal converter 14 described thus far can be used as follows in a first mode and in a second mode.

In the second mode the signal converter 14 receives a raw digital signal from the densitometer 10, wherein each sample of the raw digital signal corresponds to an actual density measurement, e.g. of a printed reference image. The printed reference image may e.g. be printed by the printing device 2 and subsequently be measured by the densitometer 10. The signal converter 14 converts the value of that raw digital signal sample into the calibrated digital signal sample value according to the predetermined relationship between each possible value of the raw digital signal sample and the corresponding value of the calibrated digital signal sample as described above.

In the first mode, the printing device 2 does not print a printed reference image. Instead, a pre-prepared printed calibration image, herein also referred to as calibration chart, is fed through the substrate transport system. Thus, the printed calibration image passes the densitometer 10 and the density of the printed calibration image is measured by the densitometer.

Herein the printed calibration image may be similar to the printed reference image, but is preferably not identical to the printed reference image. The printed calibration image may e.g. comprise regions with predetermined color density, for separate (pure) printed colors and/or mixed colors, e.g. in the form of a wedge having a color density increasing from a first predetermined density level to a second predetermined density level. The printed calibration image may also comprise regions in grey with a predetermined color density. The printed calibration image may e.g. deviate from the reference image in that an order of regions with a predetermined density is reversed.

In a preferred embodiment, the printed calibration image comprises a sequence of regions with a predetermined optical density values (herein also referred to as predetermined calibration sequence) which are accurately known. Thereto, the sequence of optical density values may e.g. be accurately determined using a very accurate densitometer which may be remote from or not related to the digital printer. The sequence of density values may e.g. be determined in a laboratory or production facility of the signal converter 14. The accurately known sequence of density values of the calibration image is stored in the memory 22 of the signal converter 14, e.g. at the laboratory or production facility. The signal converter 14 and the printed calibration image are now part of a set and belong together.

When, in the first mode, the densitometer 10 of the digital printer 1 measures the density values of the printed calibration image, and inputs the measured density values as raw digital signal samples into the signal converter 14, the signal converter 14 automatically recognizes in the raw digital signal inputted at the input 16 the sequence of raw digital signal samples corresponding to the predetermined calibration sequence, e.g. on the basis of an order of density values in the sequence. Thus, the signal converter 14 concludes that the printed calibration image is being measured.

When the signal converter recognizes that the raw digital signal inputted at the input 16 corresponds to the predetermined calibration sequence, the signal converter 14 determines the predetermined relationship between each possible value of the raw digital signal sample and the corresponding value of the calibrated digital signal sample on the basis of the inputted raw digital signal sample values corresponding to the accurately known density values of the printed calibration image. Subsequently the predetermined relationship is stored in the memory. Hence, in order to set the predetermined relationship, a user of the signal converter need not input any data or perform any action with respect to the signal converter other than supplying the printed calibration image to the densitometer. Thus the signal converter is very simple to operate.

In an advanced embodiment, the signal converter 14 is arranged to ignore an inputted raw digital signal sample value associated with a region of known density of the calibration image, if the inputted raw digital signal sample value deviates from the expected digital signal value by more than a predetermined amount. Hence, the determination of the predetermined relationship is robust against errors such as damaged or blemished regions on the printed calibration image.

It will be appreciated that, in order to increase the accuracy with which the predetermined relationship defines the relationship between a measured density, inputted as raw digital signal sample value and the known density of the calibration image, it is possible that the calibration image is presented to the densitometer a plurality of times, wherein the signal converter determines the predetermined relationship on the basis of the average of the measured density, inputted as raw digital signal sample value associated with the known density of the calibration image.

According to a second aspect of the invention, the set of the signal converter 14 and the printed calibration image may comprise further printed calibration images, i.e. a plurality of printed calibration images. Each printed calibration image may have a sequence of density values forming the predetermined calibration sequence. It is possible that the density value of at least one region of at least one of the printed calibration images is different from the density value of the corresponding region of another printed calibration image of the plurality of printed calibration images. The values of the sequence of density values of one of the printed calibration images are stored in the memory of the signal converter. Thus, at least one of the calibration images, or each printed calibration image, may comprise a region, or a plurality of regions, with a predetermined density value which does not correspond to the density value stored in the memory of the signal converter. Since, however, presenting such printed calibration image to the densitometer causes the signal converter to "believe" that the presented density value must correspond to the stored density value for that region, the predetermined relationship will be determined accordingly. Hence the predetermined relationship will reflect the density values as presented in that printed calibration image.

The printed calibration images of the plurality of printed calibration images may thus e.g. be adapted to comprise user preferences. Hence, it is possible to adapt the predetermined relationship according to user preferences by presenting the respective printed calibration image to the densitometer. It is for instance possible that a printed calibration image comprises regions with density values which are chosen such that the resulting predetermined relationship causes images printed with the digital printer, after setting the density settings of the printer by printing the reference image and measuring the density of the reference image, to have colors or a black and white tone which are generally indicated as "cool" colors. Alternatively, the printed images can e.g. be caused to have "warm" colors or black and white tone, a modified gradation or modified color scheme (e.g. to produce sepia images instead of black and white). Hence, it is possible to apply user preferences with respect to color schemes, even on digital printers which do not inherently possess this option. It is possible that the printed calibration image is provided with a visual indication, e.g. a sample photograph (such as a color photograph and/or black and white photograph), to indicate to the user how that printed calibration image will modify the outcome of the printing process.

It will be appreciated that user preferences can also be set using the signal converter in other ways. It is for instance possible to store a plurality of mutually different sequences of density values in the memory of the signal converter. Then, it is possible to select a desired color scheme of the printer by presenting the single printed calibration image belonging to that signal converter to the densitometer, and selecting the stored sequence of density values associated with the user preference, e.g. the desired contrast, luminance, gradation, or color scheme. The desired stored sequence of density values may e.g. be selected by controlling control means, such as switches or a user interface (e.g. a touch screen), on the signal converter.

Alternatively, or additionally, it is possible to modify the predetermined relationship. The predetermined relationship, e.g. determined on the basis of the printed calibration image and the stored known density values of that printed calibration image, may e.g. be modified by changing the predetermined relationship such that a desired parameter, such as contrast, luminance, gradation, or color scheme, of an image printed by the digital printer and associated with the predetermined relationship is printed, and modified with respect to the digital image inputted into the printer, according to a user preference. Thereto, the predetermined relationship may be modified such that each possible value of the raw digital signal sample corresponds to a desired value of the calibrated digital signal according to the user preference. The predetermined relationship may e.g. be modified by controlling control means, such as switches, potentiometers or a user interface, on the signal converter. It will be appreciated that it is also possible to store both the original predetermined relationship and the modified predetermined relationship in the memory in order to be able to easily revert to the original predetermined relationship.

The signal converter 14 may comprise an indicator for indicating a status of the signal converter 14. The indicator may e.g. comprise a visual indicator, such as an LED (light emitting diode) or a plurality of LEDs or an alphanumerical screen. In an exemplary embodiment (see Fig. 3) the signal converter comprises a first indicator, here a green LED, for indicating proper functioning of the signal converter. The first indicator may e.g. indicate, e.g. by emitting light, that the predetermined relationship is stored in the memory and that subsequently inputted raw digital signals will be converted to calibrated digital signals. The first indicator may also indicate that a proper conversion of a raw digital signal sample into a calibrated digital signal sample has been performed, e.g. by flashing. In this example the signal converter 14 also comprises a second indicator, here a red LED, for indicating improper functioning of the signal converter. The second indicator may e.g. indicate, e.g. by emitting light, continuously or intermittently, that no predetermined relationship is stored in the memory, and that inputted raw digital signals will be outputted unmodified, i.e. that the outputted signal will be equal to the inputted signal. It will be appreciated that the first and second indicators may also be combined in a single indicator.

The invention is in no way limited to the above examples and various modifications are possible.

It is for example possible that the signal converter is arranged for reporting a status, e.g. predetermined relationship present in the memory or not, outwardly, e.g. by means of an output cable or output connector.

In the examples the communications connection between the densitometer, signal converter and control unit is described as a wired connection. It is also possible that alternatively, or additionally, a wireless communications connection is used.

In the examples the signal converter comprises an input. It is also possible that the signal converter comprises a plurality of inputs for each receiving one of a plurality of raw digital signals comprising at least one sample, wherein the conversion means are arranged for converting each raw digital signal into a respective calibrated digital signal comprising at least one samples according to a predetermined relationship between each possible value of the raw digital signal sample and a corresponding value of the calibrated digital signal sample. It will be appreciated that it is also possible to store a plurality of predetermined relationships in the memory, e.g. one predetermined relationship for each input. It is also possible that the signal converter comprises a plurality of outputs, e.g. such that each input is associated with one respective output.

It is possible that the signal converter is provided with means, such as a connector, for allowing a firmware to be upgraded. In a preferred embodiment, (one of) an existing connector or interface is used for this purpose, for the purpose of ease of use and cost reduction.

It is possible that the signal converter is provided with a watch-dog timer which is arranged to start the signal converter after any error causing the signal converter to stop functioning.

It will be appreciated that the signal converter can also be used in systems, other than a digital printer, comprising a densitometer. It will also be appreciated that the signal converter according to the invention can be used in other systems comprising a measurement apparatus, e.g. other than a densitometer, and a measurement signal processing device.

All such variations are understood to fall within the scope of the invention.

## Claims

1. Signal converter for converting a raw digital signal into a calibrated digital signal, comprising
an input for receiving the raw digital signal comprising at least one sample,
conversion means for converting the raw digital signal into the calibrated digital signal comprising at least one sample according to a predetermined relationship between each possible value of the raw digital signal sample and a corresponding value of the calibrated digital signal sample, and
an output for outputting the calibrated digital signal, wherein the signal converter comprises a memory for storing the predetermined relationship.

2. Signal converter according to claim 1, wherein the signal converter is arranged to be operated in a first mode and in a second mode,
wherein the signal converter is arranged for, in the first mode in response to receiving a sequence of raw digital signal samples corresponding to a measurement of a predetermined calibration sequence, determining the predetermined relationship between each possible value of the raw digital signal sample and the corresponding value of the calibrated digital signal sample and storing the predetermined relationship in the memory, and
wherein the signal converter is arranged for, in the second mode in response to receiving a raw digital signal sample corresponding to an actual measurement, converting that raw digital signal sample into a calibrated digital signal sample according to the predetermined relationship between each possible value of the raw digital signal sample and the corresponding value of the calibrated digital signal sample.

3. Signal converter according to claim 2, wherein the signal converter is arranged for automatically recognizing in a raw digital signal inputted at the input the sequence of raw digital signal samples corresponding to the predetermined calibration sequence.

4. Signal converter according to claim 2 or 3, wherein the signal converter is arranged to determine the predetermined relationship on the basis of a plurality of sequences of raw digital signal samples corresponding to a plurality of measurements of the predetermined calibration sequence.

5. Signal converter according to any one of the preceding claims,
wherein the input is arranged to be brought in signal communication with a measurement apparatus for providing a measurement signal at the input of the converter, and wherein the output of the converter is arranged to be brought in signal communication with a measurement signal processing device for providing the calibrated signal to the signal processing device.

6. Signal converter according to claim 5, wherein the signal converter is arranged to determine disconnection of the signal communication between the input and the measurement apparatus, e.g. due to replacement of the measurement apparatus by another specimen, possibly but not necessarily of the same type.

7. Signal converter according to claim 5 or 6, wherein the signal converter is arranged as a replacement module, such as a replacement cable, for replacing a direct data connection, such as a direct data cable, which otherwise brings the measurement apparatus in signal communication with the measurement signal processing device or as an add-on module arranged to be added to (or inserted into) a direct data connection which otherwise brings the measurement apparatus in signal communication with the measurement signal processing device.

8. Signal converter according to any one of claims 5-7, wherein the signal converter is arranged for receiving electric power from the measurement apparatus and/or the measurement signal processing device.

9. Signal converter according to any one of the preceding claims, comprising an A/D converter at the input for converting an input raw analog signal into the raw digital signal, and a D/A converter at the output for converting the calibrated digital signal into a calibrated analog signal.

10. Signal converter according to any one of the preceding claims, wherein the input is arranged for receiving a density signal of a densitometer, the conversion means are arranged for converting the raw density signal into a calibrated density signal, and the output is arranged for outputting the calibrated density signal.

11. Signal converter according to at least claim 2 and 10 , further comprising a printed calibration image having thereon a sequence of density values forming the predetermined calibration sequence, wherein the values of the sequence of density values are stored in the memory.

12. Signal converter according to at least claims 2 and 10, comprising a plurality of printed calibration images having thereon a sequence of density values forming the predetermined calibration sequence, wherein at least one of the density values of at least one of the printed calibration images is different from the corresponding density value of another printed calibration image of the plurality of printed calibration images, wherein the values of the sequence of density values of one of the printed calibration images are stored in the memory.

13. Signal converter according claim 11 or 12, wherein the signal converter is arranged for automatically recognizing in a raw digital signal inputted at the input the sequence of raw digital signal samples corresponding to the printed calibration image.

14. Signal converter according to any one of the preceding claims, comprising a plurality of inputs for each receiving one of a plurality of raw digital signals comprising at least one sample, wherein the conversion means are arranged for converting each raw digital signal into a respective calibrated digital signal comprising at least one samples according to a predetermined relationship between each possible value of the raw digital signal sample and a corresponding value of the calibrated digital signal sample.

15. Method for modifying an existing digital printer, comprising adding a signal converter according to any one of the previous claims, such that the input of the signal converter is in signal communication with a density signal output of a densitometer of the digital printer and that the output of the signal converter is in signal communication with a density signal input of the remainder of the digital printer.

16. Method for implementing a user preference in the color scheme of a digital printer, comprising adding to the digital printer a signal converter according to claim 11 or 12, such that the input of the signal converter is in signal communication with a density signal output of a densitometer of the digital printer and that the output of the signal converter is in signal communication with a density signal input of the remainder of the digital printer, presenting a printed calibration image to the densitometer and determining the predetermined relationship on the basis of a density measurement of the sequence of density values of the printed calibration image and the sequence of density values of the printed calibration image stored in the memory of the signal converter.
